# EUROPEAN PATENT APPLICATION

(11) **EP 4 644 142 A1**
(43) Date of publication of application: **05.11.2025**
(21) Application number: 24174008.3
(22) Date of filing: 03.05.2024
(51) Int. Cl.: B60H 1/00, B60H 1/14, B60H 1/22, B60H 1/32

(54) **METHOD OF CONTROLLING OPERATION OF A VEHICLE HEATING SYSTEM, COMPUTER PROGRAM, COMPUTER-READABLE MEDIUM, CONTROL ARRANGEMENT, AND VEHICLE**

(71) Applicant: Scania CV AB, 151 87 Södertälje (SE)
(72) Inventor: ERIKSSON, Rickard, 144 52 Rönninge (SE); VENUGOPAL, Deepu Krishnan, 151 60 Södertälje (SE); WAHLQVIST, Jörgen, 619 33 Trosa (SE)
(74) Representative: Scania CV AB

(57) **Abstract**

Method of controlling operation of a vehicle heating system (1), wherein the method comprises the steps of obtaining a remaining heating need of an occupant compartment (55) based on a current coolant temperature in a coolant loop (3) and a desired temperature of the occupant compartment (55), estimating an energy consumption for operation in a first mode in which the remaining heating need is met using a heat pump circuit (5), a second mode in which the remaining heating need is met using an electric heater (7), or a third mode in which the remaining heating need is met using a combination of the heat pump circuit (5) and the electric heater (7), and selecting to operate the vehicle heating system (1) in the first, second, or third mode based on the lowest estimated energy consumption.

## Description

### TECHNICAL FIELD

The present disclosure relates to a method of controlling operation of a vehicle heating system. The present disclosure further relates to a computer program, a computer-readable medium, a control arrangement configured to control operation of a vehicle heating system, as well as a vehicle comprising a control arrangement.

### BACKGROUND

Powertrains are used in vehicles for providing motive power to the vehicle via a number of wheels of the vehicle. A powertrain comprises a power source and a drive train. Traditionally, vehicles have been provided with a power source in the form of an internal combustion engine. However, a current trend is towards electric drive which provides many advantages, especially regarding local emissions. Such vehicles comprise one or more electric propulsion motors configured to provide motive power to the vehicle. These types of vehicles can be divided into the categories pure electric vehicles and hybrid electric vehicles. Pure electric vehicles, sometimes referred to as battery electric vehicles, only-electric vehicles, and all-electric vehicles, comprise a pure electric powertrain and comprise no internal combustion engine and therefore produce no emissions in the place where they are used.

A hybrid electric vehicle comprises two or more distinct types of power, such as an internal combustion engine and an electric propulsion system. The combination of an internal combustion engine and an electric propulsion system provides advantages with regard to energy efficiency, partly because of the poor energy efficiency of an internal combustion engine at lower power output levels. Moreover, some hybrid electric vehicles are capable of operating in pure electric drive when wanted, such as when driving in certain areas.

In electric vehicles, such as pure electric vehicles and hybrid electric vehicles, the electricity is usually stored in an electrical storage system normally comprising a number of battery packs each comprising a number of rechargeable battery cells. Some different types of battery cells are used, such as lithium-ion battery cells, lithium polymer battery cells, as well as other types of rechargeable battery cells. Multiple battery packs are often required to ensure a sufficient available operational range of a vehicle, system voltage and power, especially in battery packs for heavier types of vehicles.

Vehicles normally comprise an occupant compartment configured to accommodate a number of vehicle occupants, such as a driver and one or more passengers of the vehicle. Moreover, vehicles normally comprise a heating system arranged to heat the occupant compartment of the vehicle. The occupant compartment is preferably heated upon low ambient temperatures to provide comfort for the vehicle occupants in the occupant compartment but also for safety reasons because the heating helps to keep the vehicle's windows clear of condensation and ice.

In vehicles powered by internal combustion engines, a significant amount of residual heat is available for heating the occupant compartment, due to the relatively low energy efficiency of these engines. However, significantly less residual heat is typically available in vehicles with electric powertrains, largely due to the higher energy efficiency of these systems compared to those with internal combustion engines. Therefore, electric vehicles usually include an electric heater to warm the occupant compartment. Although electric heaters can quickly heat the compartment, they consume a substantial amount of energy in doing so. This energy is most often drawn from the vehicle's electrical storage system, which can reduce the overall operational range of the vehicle.

This problem can be alleviated by the use of a heat pump circuit, wherein heat can be extracted in an evaporator of the heat pump circuit, for example in heat exchanging contact with ambient air, part of the propulsion system, or the electrical storage system, and transferred to the occupant compartment via a condenser of the heat pump circuit. Even though a heat pump circuit is more energy efficient than an electric heater in many operational conditions, it still uses energy to power a compressor of the heat pump circuit. Also in these cases, the energy is most often taken from the electrical storage system of the vehicle which impairs the available operational range of the vehicle.

Moreover, a general problem when it comes to vehicles and the different systems thereof is energy efficiency. For vehicles powered by fossil fuels or renewable fuels, increased efficiency leads to lower fuel consumption, which in turn reduces operating costs and carbon dioxide emissions per distance travelled, important for addressing climate change. However, the total energy efficiency of electric vehicles is also important for several reasons. Enhanced efficiency allows them to travel further on a single charge, improving their practicality and attractiveness to consumers. Moreover, efficient use of electricity decreases the environmental impact associated with the vehicle's operation. Accordingly, improving energy efficiency in electric vehicles can also support the reduction of global carbon emissions and the advancement of sustainable energy technologies.

### SUMMARY

It is an object of the present invention to overcome, or at least alleviate, at least some of the above-mentioned problems and drawbacks. The object is achieved by the subject-matter of the appended independent claim(s).

According to a first aspect of the present disclosure, the object is achieved by a method of controlling operation of a vehicle heating system, wherein the vehicle heating system comprises a coolant loop, a heat pump circuit, and an electric heater each arranged to heat an occupant compartment of the vehicle. The method comprises the steps of:
- obtaining a remaining heating need of the occupant compartment based on a current coolant temperature in the coolant loop and a desired temperature of the occupant compartment,
- estimating an energy consumption for operation in a first mode in which the remaining heating need is met using the heat pump circuit,
- estimating an energy consumption for operation in a second mode in which the remaining heating need is met using the electric heater,
- estimating an energy consumption for operation in a third mode in which the remaining heating need is met using a combination of the heat pump circuit and the electric heater, and
- selecting to operate the vehicle heating system in the first, second, or third mode based on the lowest estimated energy consumption.

Thereby, a method is provided capable of minimizing the energy consumption required for the heating the occupant compartment in various operational conditions of the vehicle. This is because the energy consumption for meeting the remaining heating need is estimated for the first, second, and third mode respectively, wherein the mode for operation is selected based on the lowest estimated energy consumption. Accordingly, due to the features of the method, the free residual heat from the coolant loop is utilized for heating the occupant compartment, wherein the remaining heating need is met using the mode with the lowest estimated energy consumption.

Thus, in this manner, a method is provided capable of minimizing the energy consumption required for the heating the occupant compartment in various operational conditions of the vehicle. As a further result, a method is provided capable of improving the total energy efficiency of the vehicle, extending the operational range of the vehicle, as well as reducing the environmental impact thereof.

Accordingly, a method is provided overcoming, or at least alleviating, at least some of the above-mentioned problems and drawbacks. As a result, the above-mentioned object is achieved.

The step of selecting to operate the vehicle heating system in the first, second, or third mode based on the lowest estimated energy consumption may comprise the steps of:
- identifying a mode from a set comprising the first, second, and third mode, wherein the identified mode has the lowest estimated energy consumption, and
- operating the vehicle heating system in the identified mode.

Optionally, the method may comprise the step of:
- inputting the current coolant temperature in the coolant loop.

The step of inputting the current coolant temperature in the coolant loop may be performed based on data from a temperature sensor in heat exchanging contact with coolant in the coolant loop.

Optionally, the method may comprise the step of:
- inputting a desired temperature of the occupant compartment.

The step of inputting the desired temperature of the occupant compartment may be performed by inputting data from a device or system of the vehicle, such as a climate control unit.

Optionally, the step of estimating the energy consumption for operation in the third mode comprises:
- identifying the lowest possible energy consumption for meeting the remaining heating need using the combination of the heat pump circuit and the electric heater.

Thereby, a method is provided capable of further minimizing the energy consumption required for the heating the occupant compartment at various operational conditions of the vehicle.

The step of identifying the lowest possible energy consumption for meeting the remaining heating need using the combination of the heat pump circuit and the electric heater may be performed by:
- obtaining a magnitude of the remaining heating need, and
- identifying the lowest possible energy consumption for meeting the remaining heating need by comparing the obtained magnitude of the remaining heating need with data indicative of the operational efficiency the combination of the heat pump circuit and the electric heater at various operational rates thereof.

The data indicative of the operational efficiency the combination of the heat pump circuit and the electric heater may be obtained from previous testing procedures of the vehicle heating system of the vehicle. Moreover, the data indicative of the operational efficiency the combination of the heat pump circuit and the electric heater may be provided in the form of table data, matrices, or similar formats.

Optionally, the heat pump circuit comprises an evaporator, a compressor, and a condenser, and wherein the step of identifying the lowest possible energy consumption for operation in the third mode comprises:
- identifying a proportion of operation rates between the compressor and the electric heater which provides the lowest possible energy consumption for meeting the remaining heating need.

Thereby, a method is provided capable of further minimizing the energy consumption required for the heating the occupant compartment at various operational conditions of the vehicle.

The step of identifying the proportion of operation rates between the compressor and the electric heater which provides the lowest possible energy consumption for meeting the remaining heating need may be performed by:
- obtaining a magnitude of the remaining heating need, and
- identifying the proportion of operation rates by comparing the obtained magnitude of the remaining heating need with data indicative of the operational efficiency of different proportions of operation rates between the compressor and the electric heater.

The data indicative of the operational efficiency of different proportions of operation rates between the compressor and the electric heater may be obtained from previous testing procedures of the vehicle heating system of the vehicle. Like above, this data may be provided in the form of table data, matrices, or similar formats. The term operational efficiency, as used herein, may mean a ratio between useable outputted heat energy and inputted electrical energy.

Optionally, the vehicle heating system comprises an air conditioning apparatus comprising a fan, the electric heater, and a heat exchanger, wherein the coolant loop extends through the heat exchanger, and wherein the fan is configured to generate an airflow through the electric heater and the heat exchanger into the occupant compartment, and wherein the heat pump circuit comprises an evaporator, a compressor, and a condenser, wherein the condenser is in heat exchanging contact with the coolant loop, and wherein the method comprises the step of:
- initiating operation of the vehicle heating system in the first mode by initiating operation of the compressor.

Thereby, a method is provided capable of transitioning to the first mode of operation in a simple and smooth manner.

Optionally, the method comprises the step of:
- initiating operation of the vehicle heating system in the third mode by initiating operation of the compressor and the electric heater.

Thereby, a method is provided capable of transitioning to the third mode of operation in a simple and smooth manner.

Optionally, the method comprises the step of:
- initiating operation of the vehicle heating system in the second mode by initiating operation of the electric heater.

Thereby, a method is provided capable of transitioning to the second mode of operation in a simple and smooth manner.

According to a second aspect of the present disclosure, the object is achieved by a computer program comprising instructions to cause the control arrangement according to the second aspect of the present disclosure to execute the steps of the method according to some embodiments of the first aspect of the present disclosure. Since the computer program comprises instructions to cause the control arrangement to carry out the method according to some embodiments described herein, a computer program is provided which provides conditions for overcoming, or at least alleviating, at least some of the above-mentioned drawbacks. As a result, the above-mentioned object is achieved.

According to a third aspect of the present disclosure, the object is achieved by a computer-readable medium having stored thereon the computer program according to the second aspect of the present disclosure. Since the computer-readable medium comprises instructions to cause the control arrangement to carry out the method according to some embodiments described herein, a computer-readable medium is provided which provides conditions for overcoming, or at least alleviating, at least some of the above-mentioned drawbacks. As a result, the above-mentioned object is achieved.

According to a fourth aspect of the present disclosure, the object is achieved by a control arrangement configured to control operation of a vehicle heating system, wherein the vehicle heating system comprises a coolant loop, a heat pump circuit, and an electric heater each arranged to heat an occupant compartment of the vehicle, and wherein the control arrangement is configured to:
- obtain a remaining heating need of the occupant compartment based on a current coolant temperature in the coolant loop and a desired temperature of the occupant compartment,
- estimate an energy consumption for operation in a first mode in which the remaining heating need is met using the heat pump circuit,
- estimate an energy consumption for operation in a second mode in which the remaining heating need is met using the electric heater,
- estimate an energy consumption for operation in a third mode in which the remaining heating need is met using a combination of the heat pump circuit and the electric heater, and
- select to operate the vehicle heating system in the first, second, or third mode based on the lowest estimated energy consumption.

Thereby, a control arrangement is provided capable of minimizing the energy consumption required for the heating the occupant compartment in various operational conditions of the vehicle. This is because the energy consumption for meeting the remaining heating need is estimated for the first, second, and third mode respectively, wherein the mode for operation is selected based on the lowest estimated energy consumption. Accordingly, due to the features of the control arrangement, the free residual heat from the coolant loop is utilized for heating the occupant compartment, wherein the remaining heating need is met using the mode with the lowest estimated energy consumption. Thus, in this manner, a control arrangement is provided capable of minimizing the energy consumption required for the heating the occupant compartment in various operational conditions of the vehicle. As a further result, a control arrangement is provided capable of improving the total energy efficiency of the vehicle, extending the operational range of the vehicle, as well as reducing the environmental impact thereof.

Accordingly, a control arrangement is provided overcoming, or at least alleviating, at least some of the above-mentioned problems and drawbacks. As a result, the above-mentioned object is achieved.

It will be appreciated that the various embodiments described for the method are all combinable with the control arrangement as described herein. That is, the control arrangement according to the fourth aspect of the invention may be configured to perform any one of the method steps of the method according to the first aspect of the invention.

According to a fifth aspect of the present disclosure, the object is achieved by a vehicle comprising an occupant compartment and a vehicle heating system, wherein the vehicle heating system comprises a coolant loop, a heat pump circuit, and an electric heater each arranged to heat the occupant compartment, and wherein the vehicle comprises a control arrangement according to the fourth aspect of the present disclosure.

Thus, in this manner, a vehicle is provided having conditions for minimized energy consumption required for the heating the occupant compartment in various operational conditions of the vehicle. As a further result, a vehicle is provided having conditions for improved total energy efficiency, extended operational range, as well as a reduced environmental impact thereof.

Accordingly, a vehicle is provided overcoming, or at least alleviating, at least some of the above-mentioned problems and drawbacks. As a result, the above-mentioned object is achieved.

Optionally, the vehicle comprises a propulsion system configured to provide motive power to the vehicle, and wherein the coolant loop is configured to cool at least part of the propulsion system. Thereby, a vehicle is provided in which the free residual heat from the propulsion system can be utilized for heating the occupant compartment, wherein the remaining heating need is met using the mode among the first, second, and third mode with the lowest estimated energy consumption.

Optionally, the propulsion system comprises an electric propulsion machine and power electronics, and wherein the coolant loop is configured to cool at least one of the electric propulsion machine and the power electronics. Thereby, a vehicle is provided in which the free residual heat from the at least one of the electric propulsion machine and the power electronics can be utilized for heating the occupant compartment, wherein the remaining heating need is met using the mode among the first, second, and third mode with the lowest estimated energy consumption.

Optionally, the vehicle is a heavy road vehicle, such as a truck or a bus. Thereby, a heavy road vehicle is provided having at least some of the above mentioned advantages.

Further features of, and advantages with, the present invention will become apparent when studying the appended claims and the following detailed description.

### BRIEF DESCRIPTION OF THE DRAWINGS

Various aspects of the present disclosure, including its particular features and advantages, will be readily understood from the example embodiments discussed in the following detailed description and the accompanying drawings, in which:
Fig. 1 schematically illustrates a vehicle according to some embodiments,
Fig. 2 schematically illustrates a propulsion system and a vehicle heating system of the vehicle illustrated in Fig. 1,
Fig. 3 schematically illustrates a method of controlling operation of a vehicle heating system, and
Fig. 4 illustrates a computer-readable medium.

### DETAILED DESCRIPTION

Aspects of the present disclosure will now be described more fully. Like reference signs refer to like elements throughout. Well-known functions or constructions will not necessarily be described in detail for brevity and/or clarity.

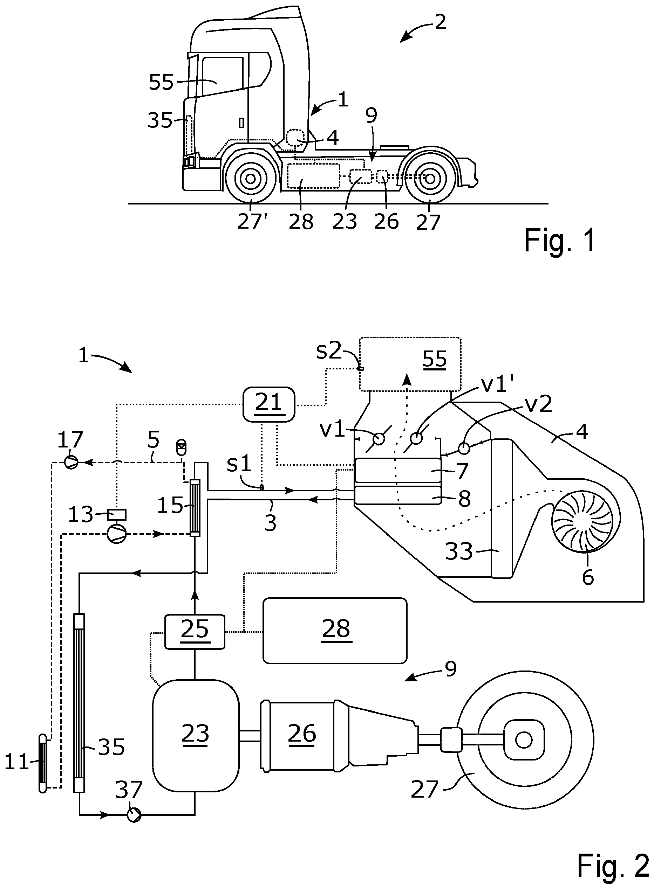

**Fig. 1** schematically illustrates a vehicle 2 according to some embodiments. According to the illustrated embodiments, the vehicle 2 is a truck, i.e., a type of heavy road vehicle, as well as a type of heavy commercial vehicle. According to further embodiments, the vehicle 2, as referred to herein, may be another type of heavy or lighter type of manned or unmanned vehicle for land-based propulsion such as a lorry, a bus, a construction vehicle, a tractor, a car, or the like.

The vehicle 2 comprises a propulsion system 9. The propulsion system 9 is configured to provide motive power to the vehicle 2 via driven wheels 27 of the vehicle 2. In more detail, according to the illustrated embodiments, the propulsion system 9 comprises a transmission 26 and an electric propulsion machine 23. The electric propulsion machine 23 is operably connected to driven wheels 27 of the vehicle 2 via the transmission 26. In other words, the electric propulsion machine 23 is configured to provide motive power to the vehicle 2 via the transmission 26 and the driven wheels 27 of the vehicle 2.

According to the illustrated embodiments, the vehicle 2 comprises two driven wheels 27 which constitute rear-wheels of the vehicle 2. The vehicle 2 further comprises two non-driven wheels 27', which according to the illustrated embodiments constitute front-wheels of the vehicle 2. However, according to further embodiments, the vehicle 2 may comprise another configuration of driven and non-driven wheels.

According to the illustrated embodiments, the vehicle 2 comprises an electrical energy storage system 28 configured to store electrical energy. The electric propulsion machine 23 is configured to operate using electricity from the electrical energy storage system 28. The electrical energy storage system 28 may comprise a number of battery packs each comprising a number of rechargeable battery cells, such as lithium-ion battery cells, lithium polymer battery cells, lithium iron phosphate battery cells, or the like. As an alternative, or in addition, the vehicle 2 may comprise a pressure tank, such as a cryogenic pressure tank, configured to store hydrogen gas. According to such embodiments, the vehicle 2 may comprise one or more fuel cells configured to generate electricity through a chemical reaction between hydrogen from the pressure tank and oxygen. The electric propulsion machine 23 of the vehicle 2 may be configured to operate using electricity from such one or more fuel cells.

According to the illustrated embodiments, the vehicle 2 is a pure electric vehicle comprising the electric propulsion machine 23 as the only means of providing motive power to the vehicle 2 and no internal combustion engine. In other words, according to the illustrated embodiments, the propulsion system 9 of the vehicle 2 is a pure electric propulsion system. However, according to further embodiments, the vehicle 2 may be a so called hybrid electric vehicle comprising an internal combustion engine in addition to the electric propulsion machine for providing motive power to the vehicle 2. Moreover, according to some further embodiments of the present disclosure, the vehicle 2 may comprise an internal combustion engine as the only means of providing motive power to the vehicle 2 and no electric propulsion machine.

The internal combustion engine may be a diesel engine, i.e. a type of compression ignition engine. The internal combustion engine may thus be configured to operate on diesel or a diesel-like fuel, such as biodiesel, biomass to liquid (BTL), or gas to liquid (GTL) diesel. Diesel-like fuels, such as biodiesel, can be obtained from renewable sources such as vegetable oil which mainly comprises fatty acid methyl esters (FAME). Diesel-like fuels can be produced from many types of oils, such as rapeseed oil (rapeseed methyl ester, RME) and soybean oil (soy methyl ester, SME).

According to further embodiments, the internal combustion engine may be an Otto engine with a spark-ignition device, wherein the Otto engine is configured to run on petrol, alcohol, a gaseous fuel, or combinations thereof. Alcohol, such as ethanol, can be derived from renewable biomass.

The gaseous fuel may also be referred to as fuel gas and may encompass any type of fuel that under ordinary ambient temperature and pressure conditions are gaseous and which can be stored at pressure in a pressure tank and can be combusted in an internal combustion engine to produce useful work. Examples of such gaseous fuels are compressed natural gas (CNG), liquified natural gas (LNG), Liquefied Petroleum Gas (LPG), Hydrogen (H2), Biogas, and Syngas. Many gaseous fuels can be derived from renewable sources, such as from renewable biomass. According to embodiments herein, the internal combustion engine may be a four-stroke internal combustion engine.

The vehicle 2 comprises an occupant compartment 55. The occupant compartment 55 is configured to accommodate a number of vehicle occupants, such as a driver and/or one or more passengers of the vehicle 2. The vehicle 2 further comprises a vehicle heating system 1 configured to heat the occupant compartment 55, as is further explained in detail below.

**Fig. 2** schematically illustrates the propulsion system 9 and the vehicle heating system 1 of the vehicle 2 illustrated in Fig. 1. Below, simultaneous reference is made to Fig. 1 and Fig. 2, if not indicated otherwise.

The electric propulsion machine 23 and the transmission 26 of the propulsion system 9 are schematically indicated in Fig. 2. Moreover, as indicated in Fig. 2, the propulsion system 9 comprises power electronics 25. The power electronics 25 is configured to control the transfer of electricity between the electrical energy storage system 28 and the electric propulsion machine 23. Each of the electric propulsion machine 23, the power electronics 25, and the electrical energy storage system 28 generates heat during operation.

The propulsion system 9 comprises a coolant loop 3. The coolant loop 3 is configured to cool at least part of the propulsion system 9. In more detail, according to the illustrated embodiments, the coolant loop 3 is configured to cool each of the electric propulsion machine 23 and the power electronics 25. According to further embodiments, the coolant loop 3 may be configured to cool at least one of the electric propulsion machine 23 and the power electronics 25. Moreover, according to some embodiments, the coolant loop 3, as referred to herein, may alternatively or additionally be configured to cool another part or portion of the propulsion system 9 of the vehicle 2, such as the electrical energy storage system 28 or an internal combustion engine of the propulsion system 9 of the vehicle 2.

The vehicle heating system 1 further comprises a heat exchanger 8, wherein the coolant loop 3 extends through the heat exchanger 8. Moreover, the vehicle heating system 1 comprises an electric heater 7. According to the illustrated embodiments, the electric heater 7 is configured to generate heat using electricity from the electrical energy storage system 28. According to further embodiments, the electric heater 7 may be configured to generate heat using electricity supplied from another device or system of the vehicle 2, such as a generator or a low voltage electrical system of the vehicle 2.

The vehicle heating system 1 comprises an air conditioning apparatus 4, wherein each of the electric heater 7 and the heat exchanger 8 is arranged in the air conditioning apparatus 4. The air conditioning apparatus 4 further comprises a fan 6. The fan 6 is configured to generate an airflow through the electric heater 7 and the heat exchanger 8 into the occupant compartment 55. The air conditioning apparatus 4 may also be referred to as an air heater.

The propulsion system 9 further comprises a radiator 35, wherein the coolant loop 3 extends through the radiator 35. Moreover, the propulsion system 9 comprises a coolant pump 37 configured to pump coolant, such as a mixture of water and glycol, through the coolant loop 3. The radiator 35 is configured to radiate heat from the coolant of the coolant loop 3 to the surroundings. According to the illustrated embodiments, the radiator 35 is arranged downstream of the heat exchanger 8 in the coolant loop 3 as seen relative to an intended flow direction of coolant through the coolant loop 3.

The radiator 35 is also indicated in Fig. 1. According to the embodiments illustrated in Fig. 1, the radiator 35 is arranged at a front area of the vehicle 2 and is configured to be subjected to a flow of air generated during forward movement of the vehicle 2. According to further embodiments, the radiator 35 may be arranged at another part or portion of the vehicle 2. Moreover, the radiator 35 may be associated with a fan assembly configured to generate an airflow through the radiator 35 upon operation. The coolant loop 3 is illustrated in simplified form in Fig. 2 and may comprise further portions, parts, and components, such as one or more thermostatic valves, bypass conduits, and the like.

The vehicle heating system 1 further comprises a heat pump circuit 5. The heat pump circuit 5 comprises an evaporator 11, a compressor 13, a condenser 15, and an expansion valve 17. The compressor 13 is configured to compress a refrigerant contained in the heat pump circuit 5. According to the illustrated embodiments, the evaporator 11 is arranged at the above mentioned front area of the vehicle 2. According to further embodiments, the evaporator 11 may be arranged at another part or portion of the vehicle 2. Heat is absorbed in the evaporator 11 causing the refrigerant of the heat pump circuit 5 to evaporate. This vapor is then conducted to the compressor 13, where it is compressed, increasing its temperature and pressure. The heated, pressurized vapor moves on to the condenser 15, where it releases the absorbed heat and condenses into a liquid. Finally, the liquid passes through the expansion valve 17, which reduces its pressure, cooling it down before it returns to the evaporator 11 to restart the cycle. This sequence enables the heat pump circuit 5 to transfer heat efficiently from the evaporator 11 to the condenser 15.

According to the illustrated embodiments, the condenser 15 is in heat exchanging contact with the coolant loop 3. In more detail, according to the illustrated embodiments, the condenser 15 is in heat exchanging contact with the coolant loop 3 at a location upstream of the heat exchanger 8. As understood from the above described, according to the illustrated embodiments, the condenser 15 of the heat pump circuit 5 is arranged to heat the occupant compartment 55 of the vehicle 2 by heating coolant of the coolant loop 3 which is conducted to the heat exchanger 8 by the pumping action of the coolant pump 37. According to further embodiments, the condenser 15 of the heat pump circuit 5 may be arranged to heat the occupant compartment 55 in another manner, such as by being arranged in the air conditioning apparatus 4. According to such embodiments, the condenser 15 may be in direct heat exchanging contact with air pumped into the occupant compartment 55 by the fan 6 of the air conditioning apparatus 4. The air conditioning apparatus 4 further comprises a set of valves v1, v1', v2 controllable to regulate the flow of air into the occupant compartment 55.

The vehicle 2 comprises a control arrangement 21 configured to control operation of the vehicle heating system 1. The control arrangement 21 may be configured to control an opening state of each of the set of valves v1, v1', v2. Moreover, according to embodiments herein, the control arrangement 21 is configured to input a current coolant temperature in the coolant loop 3. According to the illustrated embodiments, the control arrangement 21 is configured to input the current temperature in the coolant loop 3 by inputting data from a first temperature sensor s1 of the vehicle heating system 1. As depicted in Fig. 2, according to the illustrated embodiments, the first temperature sensor s1 is arranged in heat exchanging contact with coolant in the coolant loop 3 at a position between the condenser 15 and the heat exchanger 8. According to further embodiments, the control arrangement 21 may be configured to input the current temperature in the coolant loop 3 in another manner, such as by inputting data from a temperature sensor arranged at another location than depicted in Fig. 2, or by estimating the current temperature in the coolant loop 3, for example based on a current or previous operation rate of the propulsion system 9 of the vehicle 2, one or more measured temperatures, or the like.

Moreover, the control arrangement 21 is configured to input a desired temperature of the occupant compartment 55. The control arrangement 21 may be configured to input the desired temperature of the occupant compartment 55 by inputting data from a device or system of the vehicle, such as a climate control unit. The climate control unit may be operably connected to a user interface unit arranged in the occupant compartment 55 of the vehicle 2 allowing vehicle occupants to select a desired temperature of the occupant compartment 55 via the user interface unit.

Furthermore, according to the illustrated embodiments, the vehicle heating system 1 comprises a second temperature sensor s2. The second temperature sensor s2 is arranged to provide data representative of a current temperature of the occupant compartment 55.

According to the illustrated embodiments, the control arrangement 21 is configured to determine a heating need of the occupant compartment 55 based on the desired temperature of the occupant compartment 55 and the current temperature of the occupant compartment 55.

The vehicle heating system 1 is configured to heat the occupant compartment 55 using heat from the propulsion system 9 transferred to the heat exchanger 8 via the coolant loop 3. Moreover, according to embodiments herein, the control arrangement 21 is configured to obtain a remaining heating need of the occupant compartment 55 based on the current coolant temperature in the coolant loop 3 and the desired temperature of the occupant compartment 55. The control arrangement 21 may be configured to obtain the remaining heating need of the occupant compartment 55 by estimating the remaining heating need of the occupant compartment 55 based on the current coolant temperature in the coolant loop 3 and the desired temperature of the occupant compartment 55.

Moreover, according to embodiments herein, the control arrangement 21 is configured to estimate an energy consumption for operation in a first mode in which the remaining heating need is met using the heat pump circuit 5. The control arrangement 21 is further configured to estimate an energy consumption for operation in a second mode in which the remaining heating need is met using the electric heater 7. Moreover, the control arrangement 21 is configured to estimate an energy consumption for operation in a third mode in which the remaining heating need is met using a combination of the heat pump circuit 5 and the electric heater 7.

Furthermore, the control arrangement 21 is configured to select to operate the vehicle heating system 1 in the first, second, or third mode based on the lowest estimated energy consumption. In this manner, the energy consumption required for the heating the occupant compartment 55 can be minimized in various operational conditions of the vehicle 2. This is because the energy consumption for meeting the remaining heating need is estimated for the first, second, and third mode respectively, wherein the mode for operation is selected based on the lowest estimated energy consumption. Accordingly, the free residual heat from the coolant loop 3 is utilized for heating the occupant compartment 55, wherein the remaining heating need is met using the mode with the lowest estimated energy consumption. Thus, in this manner, the energy consumption required for the heating the occupant compartment 55 can be minimized in various operational conditions of the vehicle 2. As a further result, conditions are provided for improving the total energy efficiency of the vehicle, extending the operational range of the vehicle 2, as well as reducing the environmental impact thereof.

The feature that the control arrangement 21 is configured to select to operate the vehicle heating system 1 in the first, second, or third mode based on the lowest estimated energy consumption means that the control arrangement 21 is configured to select the mode among the first, second, or third mode having the lowest estimated energy consumption and to operate the vehicle heating system 1 in the selected mode. This can also be expressed as that the control arrangement 21 is configured to operate the vehicle heating system 1 in the mode among the first, second, or third mode having the lowest estimated energy consumption.

According to the illustrated embodiments, the control arrangement 21 is configured to initiate operation of the vehicle heating system 1 in the first mode by initiating operation of the compressor 13. Moreover, the control arrangement 21 is configured to initiate operation of the vehicle heating system 1 in the second mode by initiating operation of the electric heater 7. Furthermore, according to the illustrated embodiments, the control arrangement 21 is configured to initiate operation of the vehicle heating system 1 in the third mode by initiating operation of the compressor 13 and the electric heater 7.

The control arrangement 21 may be configured to estimate the energy consumption for operation in the first mode, in which the remaining heating need is met using the heat pump circuit 5, by comparing a magnitude of the remaining heating need and operational efficiency data of the heat pump circuit 5. The operational efficiency data of the heat pump circuit 5 may be obtained from previous testing procedures of the vehicle heating system 1 of the vehicle 2. Moreover, the operational efficiency data of the heat pump circuit 5 may be provided in the form of table data, matrices, or similar formats.

The control arrangement 21 may be configured to estimate the energy consumption for operation in the second mode, in which the remaining heating need is met using the electric heater 7, by comparing a magnitude of the remaining heating need and operational efficiency data of the electric heater 7. The operational efficiency data of the electric heater 7 may be obtained from previous testing procedures of the vehicle heating system 1 of the vehicle 2. Moreover, the operational efficiency data of the electric heater 7 may be provided in the form of table data, matrices, or similar formats.

Furthermore, the control arrangement 21 may be configured to estimate the energy consumption for operation in the third mode, in which the remaining heating need is met using a combination of the heat pump circuit 5 and the electric heater 7, by comparing a magnitude of the remaining heating need and operational efficiency data of the combined operation of the heat pump circuit 5 and the electric heater 7. The operational efficiency data of the combined operation of the heat pump circuit 5 and the electric heater 7 may be obtained from previous testing procedures of the vehicle heating system 1 of the vehicle 2. Moreover, the operational efficiency data of the combined operation of the heat pump circuit 5 and the electric heater 7 may be provided in the form of table data, matrices, or similar formats.

According to embodiments herein, the control arrangement 21 may be configured to estimate the energy consumption for operation in the third mode by identifying the lowest possible energy consumption for meeting the remaining heating need using the combination of the heat pump circuit 5 and the electric heater 7. In more detail, the control arrangement 21 may be configured to identify a proportion of operation rates between the compressor 13 and the electric heater 7 which provides the lowest possible energy consumption for meeting the remaining heating need. Such identifications may be based on comparisons between operational efficiency data of the heat pump circuit 5 and operational efficiency data of the electric heater 7, and/or analysis of operational efficiency data of the combined operation of the heat pump circuit 5 and the electric heater 7.

Below, some examples are provided in order to further describe the advantages of the solution according to embodiments herein. In some operational conditions of the vehicle 2, the second mode, in which the remaining heating need is met using the electric heater 7, may be more energy efficient than each of the first mode and the third mode. This is because operation of the compressor 13 of the heat pump circuit 5 consumes energy and also reduces the utilization of the free residual heat provided by the propulsion system 9.

As another example, in some other operational conditions of the vehicle 2, the third mode may be more energy efficient than each of the first and second modes. The third mode may be more energy efficient than the first mode because the use of the electric heater 7 can reduce the needed operation rate of the compressor 13 of the heat pump circuit 5, and the needed system pressure of the heat pump circuit 5, for meeting the remaining heating need. The third mode may be more energy efficient than the second mode because of a higher inherent energy efficiency of the heat pump circuit 5 as compared to the electric heater 7. Moreover, obviously, in some operational conditions of the vehicle 2, the first mode, in which the remaining heating need is met using the heat pump circuit 5, may be more energy efficient than each of the second and third mode because of the higher inherent energy efficiency of the heat pump circuit 5 as compared to the electric heater 7.

As understood from the above described, in the first mode, the remaining heating need is met using the heat pump circuit 5 without use of the electric heater 7, i.e., without operation/heat generation of the electric heater 7. Moreover, in the second mode, the remaining heating need is met using the electric heater 7 without use of the heat pump circuit 5, i.e., without operating the compressor 13 of the heat pump circuit 5. Furthermore, in the third mode, the remaining heating need is met using the combination of the heat pump circuit 5 and the electric heater 7, i.e. by operating the compressor 13 of the heat pump circuit 5 and by operating/generating heat with the electric heater 7, according to the above described.

According to the illustrated embodiments, each of the coolant loop 3, the heat pump circuit 5, and the electric heater 7 is arranged to heat the occupant compartment 55 of the vehicle 2 by heat exchange to air inside the air conditioning apparatus 4, wherein the heated air is conducted into the occupant compartment 55 by the operation of the fan 6 of the air conditioning apparatus 4. According to further embodiments, one or more of the coolant loop 3, the heat pump circuit 5, and the electric heater 7 may be arranged to heat the occupant compartment 55 of the vehicle 2 in another manner, such as by being in direct heat exchanging contact with part of the occupant compartment 55.

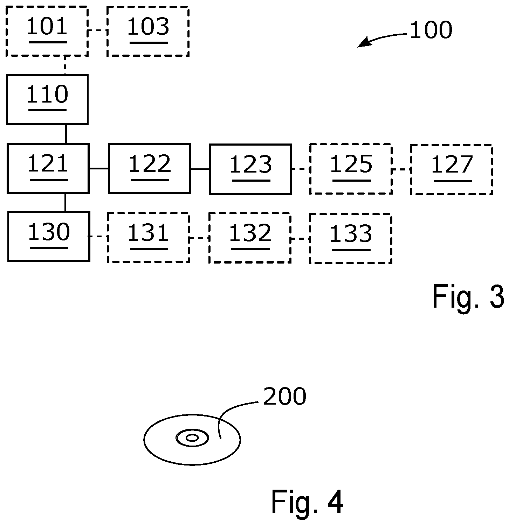

**Fig. 3** schematically illustrates a method 100 of controlling operation of a vehicle heating system. The vehicle heating system may be a vehicle heating system 1 according to the embodiments explained with reference to Fig. 1 and Fig. 2. Therefore, below, simultaneous reference is made to Fig. 1 - Fig. 3, if not indicated otherwise.

The method 100 is a method of controlling operation of a vehicle heating system 1, wherein the vehicle heating system 1 comprises a coolant loop 3, a heat pump circuit 5, and an electric heater 7 each arranged to heat an occupant compartment 55 of the vehicle 2. The method 100 comprises the steps of:
- obtaining 110 a remaining heating need of the occupant compartment 55 based on a current coolant temperature in the coolant loop 3 and a desired temperature of the occupant compartment 55,
- estimating 121 an energy consumption for operation in a first mode in which the remaining heating need is met using the heat pump circuit 5,
- estimating 122 an energy consumption for operation in a second mode in which the remaining heating need is met using the electric heater 7,
- estimating 123 an energy consumption for operation in a third mode in which the remaining heating need is met using a combination of the heat pump circuit 5 and the electric heater 7, and
- selecting 130 to operate the vehicle heating system 1 in the first, second, or third mode based on the lowest estimated energy consumption.

Moreover, as indicated in Fig. 3, the method 100 may comprise the step of:
- inputting 101 a current coolant temperature in the coolant loop 3.

Obviously, the step of inputting 101 the current coolant temperature in the coolant loop 3 may be performed prior to the step of obtaining 110 the remaining heating need of the occupant compartment 55.

Furthermore, as indicated in Fig. 3, the method 100 may comprise the step of:
- inputting 103 a desired temperature of the occupant compartment 55.

Like above, evidently, the step of inputting 103 the desired temperature of the occupant compartment 55 may be performed prior to the step of obtaining 110 the remaining heating need of the occupant compartment 55.

As is indicated in Fig. 3, the step of estimating 123 the energy consumption for operation in the third mode may comprise:
- identifying 125 the lowest possible energy consumption for meeting the remaining heating need using the combination of the heat pump circuit 5 and the electric heater 7.

According to some embodiments, the heat pump circuit 5 comprises an evaporator 11, a compressor 13, and a condenser 15. As indicated in Fig. 3, according to such embodiments, the step of identifying 125 the lowest possible energy consumption for operation in the third mode may comprise:
- identifying 127 a proportion of operation rates between the compressor 13 and the electric heater 7 which provides the lowest possible energy consumption for meeting the remaining heating need.

Moreover, according to some embodiments, the vehicle heating system 1 comprises an air conditioning apparatus 4 comprising a fan 6, the electric heater 7, and a heat exchanger 8, wherein the coolant loop 3 extends through the heat exchanger 8, and wherein the fan 6 is configured to generate an airflow through the electric heater 7 and the heat exchanger 8 into the occupant compartment 55, and wherein the heat pump circuit 5 comprises an evaporator 11, a compressor 13, and a condenser 15, wherein the condenser 15 is in heat exchanging contact with the coolant loop 3. As is indicated in Fig. 3, according to such embodiments, the method 100 may comprise the step of:
- initiating 131 operation of the vehicle heating system 1 in the first mode by initiating operation of the compressor 13.

Moreover, as depicted in Fig. 3, the method 100 may comprise the step of:
- initiating 132 operation of the vehicle heating system 1 in the second mode by initiating operation of the electric heater 7.

Furthermore, as depicted in Fig. 3, the method 100 may comprise the step of:
- initiating 133 operation of the vehicle heating system 1 in the third mode by initiating operation of the compressor 13 and the electric heater 7.

It will be appreciated that the various embodiments described for the method 100 are all combinable with the control arrangement 21 as described herein. That is, the control arrangement 21 may be configured to perform any one of the method steps 101, 103, 110, 121, 122, 123, 125, 127, 130, 131, 132, and 133.

**Fig. 4** illustrates a computer-readable medium 200 comprising instructions which, when executed by a computer, cause the computer to carry out the method 100 according to some embodiments of the present disclosure. According to some embodiments, the computer-readable medium 200 comprises a computer program comprising instructions which, when the program is executed by a computer, cause the computer to carry out the method 100 according to some embodiments. The computer may be comprised in the control arrangement 21.

One skilled in the art will appreciate that the method 100 of controlling operation of a vehicle heating system 1 may be implemented by programmed instructions. These programmed instructions are typically constituted by a computer program, which, when it is executed in the control arrangement 21, ensures that the control arrangement 21 carries out the desired control, such as the method steps 101, 103, 110, 121, 122, 123, 125, 127, 130, 131, 132, and 133 described herein. The computer program is usually part of a computer program product which comprises a suitable digital storage medium on which the computer program is stored, such as the computer-readable medium 200 illustrated in Fig. 4. In other words, the computer program product may be a computer readable medium 200 and the computer program may be stored in the computer readable medium 200.

The control arrangement 21 may comprise a computer which may take the form of substantially any suitable type of hardware or hardware/firmware device implemented using processing circuity such as, but not limited to, a processor, Central Processing Unit (CPU), a controller, an arithmetic logic unit (ALU), a digital signal processor, an Application Specific Integrated Circuit (ASIC), a circuit for digital signal processing (digital signal processor, DSP), a microcomputer, a field programmable gate array (FPGA), a System-on-Chip (SoC), a programmable logic unit, a microprocessor, an application-specific integrated circuit, or any other device capable of electronically performing operations in a defined manner, or other processing logic that may interpret and execute instructions. The herein utilised expression "computer" may represent a processing circuitry comprising a plurality of processing circuits, such as, e.g., any, some or all of the ones mentioned above.

The control arrangement 21 may further comprise a memory unit, wherein the computer may be connected to the memory unit, which may provide the computer with, for example, stored program code and/or stored data which the computer may need to enable it to do calculations. The computer may also be adapted to store partial or final results of calculations in the memory unit. The memory unit may comprise a physical device utilised to store data or programs, i.e., sequences of instructions, on a temporary or permanent basis. According to some embodiments, the memory unit may comprise integrated circuits comprising silicon-based transistors. The memory unit may comprise e.g. a memory card, a flash memory, a USB memory, a hard disc, or another similar volatile or non-volatile storage unit for storing data such as e.g. ROM (Read-Only Memory), PROM (Programmable Read-Only Memory), EPROM (Erasable PROM), EEPROM (Electrically Erasable PROM), etc. in different embodiments.

The control arrangement 21 is connected to components of the vehicle 2 for receiving and/or sending input and output signals. These input and output signals may comprise waveforms, pulses, or other attributes which the input signal receiving devices can detect as information and which can be converted to signals processable by the control arrangement 21. These signals may then be supplied to the computer. One or more output signal sending devices may be arranged to convert calculation results from the computer to output signals for conveying to other parts of the vehicle's control system and/or the component or components for which the signals are intended. Each of the connections to the respective components of the vehicle 2 for receiving and sending input and output signals may take the form of one or more from among a cable, a data bus, e.g. a CAN (controller area network) bus, a MOST (media orientated systems transport) bus or some other bus configuration, or a wireless connection.

In the embodiments illustrated, the vehicle 2 comprises a control arrangement 21 but might alternatively be implemented wholly or partly in two or more control arrangements, two or more control arrangements, or two or more control units.

Control systems in modern vehicles generally comprise a communication bus system consisting of one or more communication buses for connecting a number of electronic control units (ECUs), or controllers, to various components on board the vehicle. Such a control system may comprise a large number of control units and taking care of a specific function may be shared between two or more of them. Vehicles and engines of the type here concerned are therefore often provided with significantly more control arrangements than depicted in Fig. 2, as one skilled in the art will surely appreciate.

The computer-readable medium 200 may be provided for instance in the form of a data carrier carrying computer program code for performing at least some of the method steps 101, 103, 110, 121, 122, 123, 125, 127, 130, 131, 132, and 133 according to some embodiments of the method 100 when being loaded into one or more computers of the control arrangement 21. The data carrier may be, e.g. a CD ROM disc, as is illustrated in Fig. 4, or a ROM (read-only memory), a PROM (programable read-only memory), an EPROM (erasable PROM), a flash memory, an EEPROM (electrically erasable PROM), a hard disc, a memory stick, an optical storage device, a magnetic storage device or any other appropriate medium such as a disk or tape that may hold machine readable data in a non-transitory manner. Accordingly, in some embodiments, the computer-readable medium 200 may be a non-transitory computer-readable medium, such as a tangible electronic, magnetic, optical, infrared, electromagnetic, and/or semiconductor system, apparatus, and/or device. The computer-readable medium 200 may furthermore be provided as computer program code on a server and may be downloaded to the control arrangement 21 remotely, e.g., over an Internet or an intranet connection, or via other wired or wireless communication systems.

It is to be understood that the foregoing is illustrative of various example embodiments and that the invention is defined only by the appended independent claims. A person skilled in the art will realize that the example embodiments may be modified, and that different features of the example embodiments may be combined to create embodiments other than those described herein, without departing from the scope of the present invention, as defined by the appended independent claims.

As used herein, the term "comprising" or "comprises" is open-ended, and includes one or more stated features, elements, steps, components, or functions but does not preclude the presence or addition of one or more other features, elements, steps, components, functions, or groups thereof.

## Claims

1. A method (100) of controlling operation of a vehicle heating system (1), wherein the vehicle heating system (1) comprises a coolant loop (3), a heat pump circuit (5), and an electric heater (7) each arranged to heat an occupant compartment (55) of the vehicle (2), and
wherein the method (100) comprises the steps of:
- obtaining (110) a remaining heating need of the occupant compartment (55) based on a current coolant temperature in the coolant loop (3) and a desired temperature of the occupant compartment (55),
- estimating (121) an energy consumption for operation in a first mode in which the remaining heating need is met using the heat pump circuit (5),
- estimating (122) an energy consumption for operation in a second mode in which the remaining heating need is met using the electric heater (7),
- estimating (123) an energy consumption for operation in a third mode in which the remaining heating need is met using a combination of the heat pump circuit (5) and the electric heater (7), and
- selecting (130) to operate the vehicle heating system (1) in the first, second, or third mode based on the lowest estimated energy consumption.

2. The method (100) according to claim 1, wherein the step of estimating (123) the energy consumption for operation in the third mode comprises:
- identifying (125) the lowest possible energy consumption for meeting the remaining heating need using the combination of the heat pump circuit (5) and the electric heater (7).

3. The method (100) according to claim 2, wherein the heat pump circuit (5) comprises an evaporator (11), a compressor (13), and a condenser (15), and wherein the step of identifying (125) the lowest possible energy consumption for operation in the third mode comprises:
- identifying (127) a proportion of operation rates between the compressor (13) and the electric heater (7) which provides the lowest possible energy consumption for meeting the remaining heating need.

4. The method (100) according to any one of the preceding claims, wherein the vehicle heating system (1) comprises an air conditioning apparatus (4) comprising a fan (6), the electric heater (7), and a heat exchanger (8), wherein the coolant loop (3) extends through the heat exchanger (8), and wherein the fan (6) is configured to generate an airflow through the electric heater (7) and the heat exchanger (8) into the occupant compartment (55), and wherein the heat pump circuit (5) comprises an evaporator (11), a compressor (13), and a condenser (15), wherein the condenser (15) is in heat exchanging contact with the coolant loop (3), and wherein the method (100) comprises the step of:
- initiating (131) operation of the vehicle heating system (1) in the first mode by initiating operation of the compressor (13).

5. The method (100) according to claim 4, wherein the method (100) comprises the step of:
- initiating (133) operation of the vehicle heating system (1) in the third mode by initiating operation of the compressor (13) and the electric heater (7).

6. The method (100) according to any one of the preceding claims, wherein the method (100) comprises the step of:
- initiating (132) operation of the vehicle heating system (1) in the second mode by initiating operation of the electric heater (7).

7. A computer program comprising instructions which, when the program is executed by a computer, cause the computer to carry out the method (100) according to any one of the claims 1-6.

8. A computer-readable medium (200) comprising instructions which, when executed by a computer, cause the computer to carry out the method (100) according to any one of the claims 1-6.

9. A control arrangement (21) configured to control operation of a vehicle heating system (1), wherein the vehicle heating system (1) comprises a coolant loop (3), a heat pump circuit (5), and an electric heater (7) each arranged to heat an occupant compartment (55) of the vehicle (2), and
wherein the control arrangement (21) is configured to:
- obtain a remaining heating need of the occupant compartment (55) based on a current coolant temperature in the coolant loop (3) and a desired temperature of the occupant compartment (55),
- estimate an energy consumption for operation in a first mode in which the remaining heating need is met using the heat pump circuit (5),
- estimate an energy consumption for operation in a second mode in which the remaining heating need is met using the electric heater (7),
- estimate an energy consumption for operation in a third mode in which the remaining heating need is met using a combination of the heat pump circuit (5) and the electric heater (7), and
- select to operate the vehicle heating system (1) in the first, second, or third mode based on the lowest estimated energy consumption.

10. A vehicle (2) comprising an occupant compartment (55) and a vehicle heating system (1), wherein the vehicle heating system (1) comprises a coolant loop (3), a heat pump circuit (5), and an electric heater (7) each arranged to heat the occupant compartment (55), and wherein the vehicle (2) comprises a control arrangement (21) according to claim 9.

11. The vehicle (2) according to claim 10, wherein the vehicle (2) comprises a propulsion system (9) configured to provide motive power to the vehicle (2), and wherein the coolant loop (3) is configured to cool at least part of the propulsion system (9).

12. The vehicle (2) according to claim 11, wherein the propulsion system (9) comprises an electric propulsion machine (23) and power electronics (25), and wherein the coolant loop (3) is configured to cool at least one of the electric propulsion machine (23) and the power electronics (25).

13. The vehicle (2) according to any one of the claims 10 - 12, wherein the vehicle (2) is a heavy road vehicle, such as a truck or a bus.
